# EUROPEAN PATENT SPECIFICATION

(11) **EP 3 271 096 B1**
(45) Date of publication and mention of the grant of the patent: **10.07.2024**
(21) Application number: 16720928.7
(22) Date of filing: 17.03.2016
(51) Int. Cl.: B23B 3/16, B23C 3/32, B23D 5/02, B23D 1/08, B23B 5/08, B24B 3/02, B24B 3/36, B24B 27/00, B25J 11/00

(54) **METHOD FOR MAKING SHAPED CUTOUTS**
VERFAHREN ZUR HERSTELLUNG VON RIFFELUNGEN
PROCÉDÉ DE RÉALISATION DE CANNELURES

(30) Priority: 17.03.2015 NL 2014475
(43) Date of publication of application: 24.01.2018
(73) Proprietor: DPT Netherlands B.V., 8171 PN Vaassen (NL)
(72) Inventor: TE RIELE, Anton-Pieter Jacobus Johannes, 8171 BP Vaassen (NL); TE RIELE, Gerardus Johannes, 7315 CD Apeldoorn (NL)
(74) Representative: Patentwerk B.V.
(86) International application number: PCT/NL2016/050187
(87) International publication number: WO 2016/148570

(56) References cited:
- DE-A1- 3 844 338
- DE-A1- 3 844 338
- DE-A1- 4 012 117
- FR-A1- 2 387 733
- GB-A- 916 608
- US-A- 5 052 089
- US-A- 5 052 089
- US-A1- 2008 220 697
- US-A1- 2009 041 553
- US-A1- 2010 011 920
- US-A1- 2014 260 841
- US-B1- 6 283 824
- US-B2- 7 010 386

## Description

The present invention relates to a method for making shaped cut-outs using a fluting machine.

Fluting machines are generally used to make profiles on rollers or rolls, after which these rollers or rolls are used to mill or flatten, for example, grain. To this end, the rollers or rolls are placed on a moving slide, after which the rollers or rolls are drawn along a chisel by reciprocating movement of the slide. Following each stroke of the slide, the roller or cylinder is rotated in the slide, whereby, after a while, the entire roll or roller is provided with a profile.

To this end, the slides on which the cylinder or rollers must be placed need to be very robustly constructed, because the weight of the rolls or rollers can be considerable. The fluting machine also occupies a lot of space.

Document US5052089 relates to the preamble of claim 1 of the present invention and discloses a multi-function machine tool which permits complex machining of long pieces. The machine tool combines the following three features: the workpiece holder rotates around an axis which is referred to as horizontal turning axis and is parallel to one of the three orthogonal axes, the said axis overlying a table the flat upper-face of which is parallel to said turning axis and comprises means for fastening one or more support and/or centering means; the toolholder comprises two clamping mandrels, one for a stationary tool and the other for a rotary tool; the workpiece holder is in relation with drive means which confer upon it one of the three kinematics of the following kinematic group: immobilization in a given angular position, a so-called slow speed of rotation for milling operations which are not parallel to the axis, and a so-called high speed for the turning.

The object of the present invention is hence to solve the abovementioned problems and to provide an improved method for making cut-outs using a fluting machine.

To this end, the invention comprises a method according to claim 1, for making shaped cutouts in the casing of a metal cylinder, such as a roll, using a fluting machine, the machine comprising a frame, provided with a cylinder holder, for the rotatable positioning of the metal cylinder; rotation means, for rotating the cylinder holder about a rotation axis; and a guide extending parallel to the rotation axis; a metal-cutting tool, movable over the guide, for making shaped cutouts in the metal cylinder; and provided with a drive mechanism, for moving the metal-cutting tool over the guide; wherein the metal-cutting tool is arranged to remove a portion of the metal cylinder while moving over the guide.

The metal cylinder, such as a roll, which is placed in the rotatable cylinder holder of the fluting machine, can be provided with a profile by means of such a fluting machine, without the heavy cylinder having to be displaced in the longitudinal direction. The metal-cutting tool performs movements in the longitudinal direction of the roll and, with each movement along the roll, can take away a part of the peripheral wall of the cylinder in order thus to make a cutout in the peripheral wall and provide the cylinder with a profile. For the cutting out of a part of the cylinder, the metal-cutting tool is provided with a tooling holder for a metal-cutting element, such as a chisel or a milling cutter, wherein the metal-cutting element, with each movement of the metal-cutting tool, can remove a part of the casing of the metal cylinder.

The tooling holder of the metal-cutting tool is arranged to hold at least two metal-cutting elements, such as chisels. If one of the chisels in the tooling holder is worn or is otherwise no longer satisfactory, then a switch can be made to another chisel which is in good order, and, for example, has just been ground. For this, the metal-cutting tool does not need to be removed, which saves time and energy.

In order to be able to switch over to another metal-cutting element, the tooling holder is constructed rotatably. The tooling holder is, for example, a substantially round magazine holding a plurality of chisels, which are each situated at the very same distance from a centre axis of the magazine. When the tooling holder then undergoes a predefined rotation, a new chisel is made ready to move along the cylinder.

The tooling holder is arranged to rotate when the metal-cutting tool has executed a predefined number of movements relative to the frame or the metal-cutting tool is provided with a detection device, for detecting the state of the metal-cutting elements in the tooling holder, wherein the metal-cutting tool is arranged to rotate the tooling holder hen the state of at least one of the metal-cutting elements reaches a predefined state. This means that large cylinder which uses up a number of metal-cutting elements, such as chisels, during the making of the shaped cutouts can be treated continuously. Chisels become worn during the making of the shaped cutouts and, after a number of movements along the cylinder, may no longer be capable of removing sufficient material from the peripheral wall of the cylinder. If the chisels, after a predefined quantity of movements along the cylinder, vary and are replaced by newly ground chisels, the process can be continued. Once the making of the shaped cutouts has ended, all chisels in the tooling holder which have been used can be reground, for example, in order to be ready for use again for a new cylinder.

The tooling holder is displaceable, for example, perpendicular to the longitudinal direction, such that the distance between the tooling holder and a cylinder placed in the cylinder holder is adjustable. If one of the chisels in the tooling holder has been used frequently, for example, and after a while has decreased in length, the tooling holder, if the frequently used chisel has been ground and is used to profile a roll in the cylinder holder, can be placed further in the direction of the roll in order to still be able to exert a specific pressure on the roll.

The tooling holder stands, for example, at an angle relative to the frame, preferably at an angle between 10 and 45 degrees, preferably between 15 and 35 degrees. Such an angle allows a substantially straight chisel to make perpendicular contact with the peripheral wall of the curved cylinder.

The cylinder holder of the fluting machine is arranged, for example, to rotate the cylinder during the movement of the metal-cutting tool. The metal-cutting tool performs a substantially linear movement along the rotating cylinder, whereby, with a rotation in one direction, a helical cutout can be made in the peripheral wall of the cylinder. However, it is possible to regularly change the direction of rotation, whereby saw tooth profiles can be made. The cylinder holder can also be arranged to make substantially curved cutouts in the cylinder.

In order to guide the metal-cutting tool, the guide of the frame can comprise at least one track. The track extends, for example, substantially in the longitudinal direction of the frame and guides the metal-cutting tool preferably in a clearly defined manner, such that each movement of the metal-cutting tool takes place substantially along the same path. The frame can also be provided with a toothed rack extending in the longitudinal direction, wherein the metal-cutting tool is provided with a gearwheel driven by the drive mechanism, for moving the metal-cutting tool along the toothed rack.

The frame is provided, for example, with a support, for supporting a cylinder placed in the cylinder holder. Cylinders which in fluting machines are provided with a profile or shaped cutouts can be heavy, so that they have to be supported in order to allow rotation of the cylinder in the cylinder holder. To this end, the support comprises, for example, at least two, and preferably at least three stays, for supporting a cylinder in the support.

The stays stand, for example, at an angle relative to one another, wherein the stays are each movable in the direction of a centre axis of a cylinder to be placed in the cylinder holder. Since the stays are movable in the direction of the centre axis of the cylinder, and thus also in the direction of one another, the distance between the stays can vary, and thus the diameter of a cylinder supported in the cylinder holder can also vary. This means that in the same fluting machine cylinders of different diameters can be provided with shaped cutouts, without the need to adapt the complete fluting machine for this purpose.

The fluting machine can also be provided with a control unit, for controlling the movement of the metal-cutting tool and/or the driving of the cylinder holder. The controlling of the movement of the metal-cutting tool and the driving of the rotation of the cylinder holder means that the shaped cutouts to be made and the profiles to be made in the cylinders can also be controlled.

The metal-cutting tool can also be provided with at least one camera, for recording the fluting of a cylinder in the fluting machine. The camera thus allows the making of shaped cutouts in the cylinder to be monitored remotely and shows the actual making of the cutouts.

The metal-cutting tool is also provided with a detection device, for detecting the state of the chisels in the tooling holder. Should a chisel, for example, break off or fall out of the tooling holder and the metal-cutting tool continue performing the movements along the cylinder, then no shaped cutout is made in the cylinder and the tool moves in a vacuum. The detection device is connected, for example, to the control unit, which stops the metal-cutting tool and/or the driving of the cylinder holder when a predefined state of the chisels in the tooling holder is detected.

The metal-cutting tool is arranged to rotate the tooling holder when the state of at least one of the chisels reaches a predefined state. If, for example, one of the chisels cannot exert sufficient pressure on a roll to be profiled, and thus cannot make the shaped cutouts in the roll, the metal-cutting tool can rotate the tooling holder in order to present a sharp chisel and continue with the metal-cutting process. To this end, the detection device comprises, for example, a pressure sensor.

The frame can also be provided with a grinding device, for grinding a metal-cutting element, wherein the grinding device comprises a grinding element, such as a grinding wheel. Through movement of the metal-cutting elements, such as chisels, along a roll to be fluted, the chisels become blunt. By grinding these chisels by means of a grinding device positioned on the frame, the chisels can be ground by the fluting machine itself and human intervention in this process is not necessary. If so desired, a continuous operation of the fluting machine can herewith be achieved. The metal-cutting tool is movable, for example, in the direction of the grinding device in order to change the distance between a metal-cutting element in the metal-cutting tool and the grinding device. The grinding of the metal-cutting elements can herewith be controlled by movement of the metal-cutting tool. To this end, the grinding device can be placed at a fixed point on the frame, so that the grinding device can grind the metal-cutting elements always in the same manner. A controlled fixed manner of grinding the metal-cutting elements results in a fixed position of a point of the metal-cutting elements, such as chisels. As a result, the metal-cutting elements, after having been ground, can be placed back on the same location relative to the cylinder and the cylinder can be accurately fluted.

The fluting machine is arranged, for example, to grind the metal-cutting elements once the metal-cutting elements have reached a predefined state. The predefined state is, for example, a predefined number of movements of a metal-cutting element along the cylinder. After this number of movements, the metal-cutting element acquires the "blunt" state, and a changeover is made, for example, to another, sharp element. Once all metal-cutting elements have reached the "blunt" state, these elements are subsequently ground by the grinding device. Since the grinding device forms part of the fluting machine, the metal-cutting elements do not need to be withdrawn from the metal-cutting tool and can be left at the same place in the tool. This increases the accuracy of the machine and allows that the fluting machine can be continuously in operation.

The grinding device comprises, for example, a robot arm, provided with at least two joints. The robot arm is arranged, for example, to adjust the angle of the grinding device relative to the metal-cutting element by rotation of the robot arm about at least one of the joints. By making use of a robot arm, the grinding device can be placed at different, predefined angles relative to the metal-cutting elements in order to grind the metal-cutting elements at a predefined angle. The robot arm is programmable, so that the same angle can be set for each metal-cutting element. The effect is that a single cylinder can be operated in a controlled manner by means of a plurality of metal-cutting elements. Human errors in the grinding of the metal-cutting elements can be restricted by means of the robot arm.

The robot arm can also be arranged to slightly blunt ground metal-cutting elements, such as chisels, before these are used to profile a metal cylinder. This blunting reduces the chance of breakage of the freshly ground chisel should this be brought into contact with the metal cylinder. The blunting is, for example, between 0.01 and 0.2mm.

The invention will be explained on the basis of non-limiting illustrative embodiments represented in the following figures, in which:
- Figure 1 shows schematically a top view of a fluting machine according to the present invention, in which a metal cylinder is placed
- Figure 2 shows schematically a first side view of a fluting machine according to the present invention, in which a metal cylinder is placed
- Figure 3 shows schematically a second side view of a fluting machine according to the present invention, in which a metal cylinder is placed
- Figure 4 shows schematically a metal-cutting tool according to the present invention
- Figure 5 shows schematically a side view of a grinding device of a fluting machine according to the present invention.

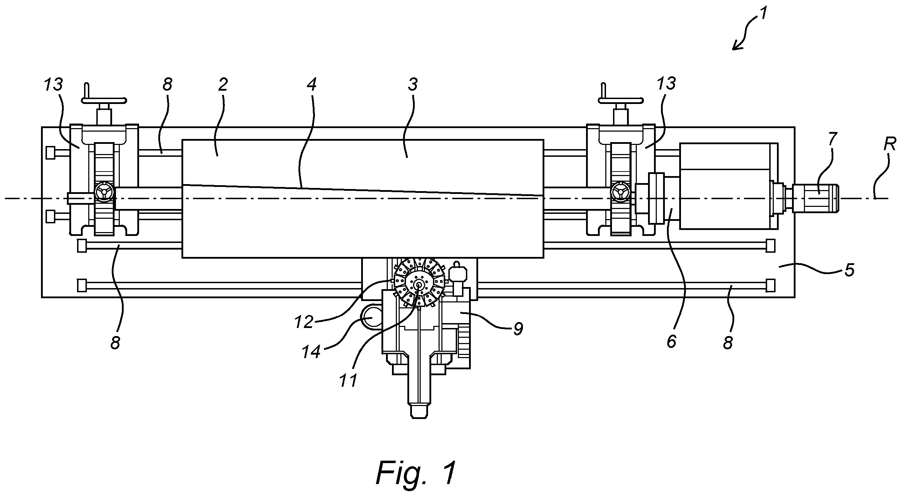

Figure 1 shows schematically a top view of a fluting machine (1) for making shaped cutouts (4) in the casing (2) of a metal cylinder (3), such as a roll, comprising a frame (5) provided with a cylinder holder (6), for the rotatable positioning of the metal cylinder (3); rotation means (7), for rotating the cylinder holder (6) about a rotation axis (R); a guide (8) extending parallel to the rotation axis (R); and a metal-cutting tool (9), movable over the guide (8), for making shaped cutouts (4) in the metal cylinder (3). The metal-cutting tool (9) is arranged to remove a portion of the metal cylinder (3) while moving over the guide (9).

The metal-cutting tool (9) comprises a drive mechanism (10), for driving the tool (9).

For the metal-cutting of the metal cylinder (3), the metal-cutting tool (9) comprises a tooling holder (11), for holding at least one chisel (12), wherein the chisel (12) exerts a pressure on the casing (2) of the metal cylinder (3) and, with each movement of the metal-cutting tool (9), takes away a portion of the casing (2) of the metal cylinder (3).

In Figure 1, the tooling holder (11) is arranged to hold twelve chisels (12), and is constructed as a rotating tooling holder (11). The frame (5) is also provided with two optional supports (13), for supporting a cylinder (3) placed in the cylinder holder (6).

The tooling holder (11) is displaceable, for example, perpendicular to the rotation axis (R), such that the distance between the tooling holder (11) and a cylinder (3) placed in the cylinder holder (6) is adjustable. To this end, the tooling holder (11) is provided with a drive mechanism (14).

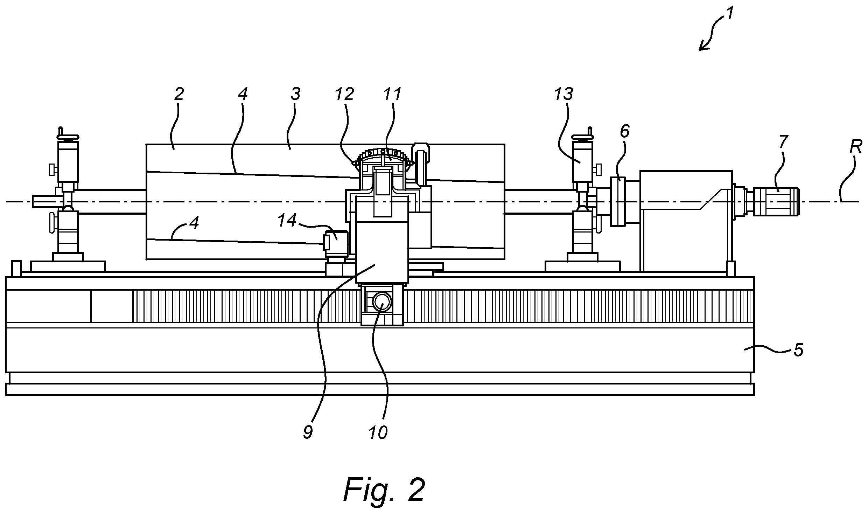

Figure 2 shows schematically a first side view of the fluting machine (1) of Figure 1, and shows a fluting machine (1) for making shaped cutouts (4) in the casing (2) of a metal cylinder (3), such as a roll, comprising a frame (5) provided with a cylinder holder (6), for the rotatable positioning of the metal cylinder (3); rotation means (7), for rotating the cylinder holder (6) about a rotation axis (R); a guide (8) extending parallel to the rotation axis (R); and a metal-cutting tool (9), movable over the guide (8), for making shaped cutouts (4) in the metal cylinder (3). The metal-cutting tool (9) is arranged to remove a portion of the metal cylinder (3) while moving over the guide (9).

The metal-cutting tool (9) comprises a drive mechanism (10), for driving the tool (9).

For the metal-cutting of the metal cylinder (3), the metal-cutting tool (9) comprises a tooling holder (11), for holding at least one chisel (12), wherein the chisel (12) exerts a pressure on the casing (2) of the metal cylinder (3) and, with each movement of the metal-cutting tool (9), takes away a portion of the casing (2) of the metal cylinder (3).

In Figure 2, the tooling holder (11) is arranged to hold twelve chisels (12), and is constructed as a rotary tooling holder (11). The frame (5) is also provided with two optional supports (13), for supporting a cylinder (3) placed in the cylinder holder (6). The tooling holder (11) is displaceable, for example, perpendicular to the rotation axis (R), such that the distance between the tooling holder (11) and a cylinder (3) placed in the cylinder holder (6) is adjustable. To this end, the tooling holder (11) is provided with a drive mechanism (14).

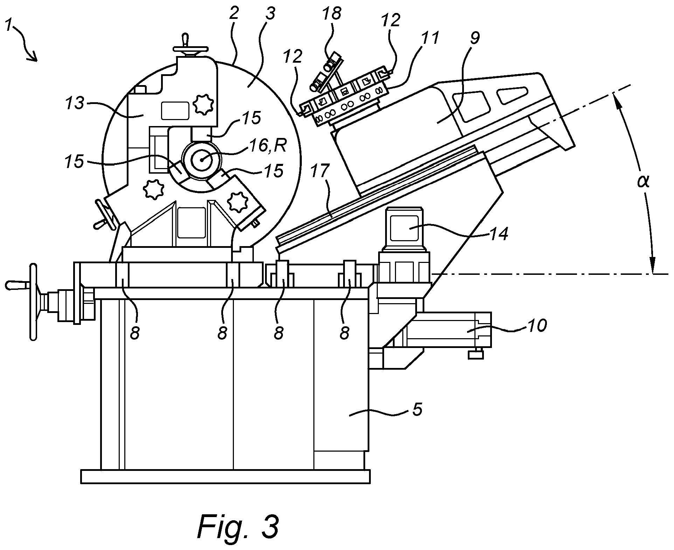

Figure 3 shows schematically a second side view of the fluting machine (1) of Figure 1 and Figure 2, and shows a fluting machine (1) for making shaped cutouts in the casing (2) of a metal cylinder (3), such as a roll.

The metal-cutting tool (9) comprises a drive mechanism (10), for driving the tool (9).

For the metal-cutting of the metal cylinder (3), the metal-cutting tool (9) comprises a tooling holder (11), for holding at least one chisel (12), wherein the chisel (12) exerts a pressure on the casing (2) of the metal cylinder (3) and, with each movement of the metal-cutting tool (9), takes away a portion of the casing (2) of the metal cylinder (3). The tooling holder (11) is constructed as a rotary tooling holder (11).

The frame (5) is also provided with an optional support (13), for supporting a placed cylinder (3). The support (13) comprises three stays (15), for supporting a cylinder (3) in the support (13). The stays (15) stand at an angle relative to one another and are each movable in the direction of a centre axis (16) of a cylinder (3) to be placed in the cylinder holder, which centre axis (16) coincides with the rotation axis (R). The tooling holder (11) is displaceable perpendicular to the rotation axis (R), such that the distance between the tooling holder (11) and a cylinder (3) placed in the cylinder holder (6) is adjustable. To this end, the tooling holder (11) is provided with a drive mechanism (14). The drive mechanism (14) is arranged to move the tooling holder (11) over a track (17) in the direction of the rotation axis (R). As a result, the distance between the metal-cutting element (12) in the tooling holder (11) and the casing (2) of the metal cylinder (3) changes. This distance can be recorded by means of a camera (18) and fed back to a user of the fluting machine (1). By varying the distance between the metal-cutting element (12) in the tooling holder (11) and the casing (2) of the metal cylinder (3), the force which the metal-cutting element (12) exerts on the casing (2) can also be varied, and thus also, for example, the depth of the shaped cutouts.

In the shown embodiment of Figure 3, the tooling holder (11) stands at an angle (α) of approximately 25 degrees relative to the frame (5).

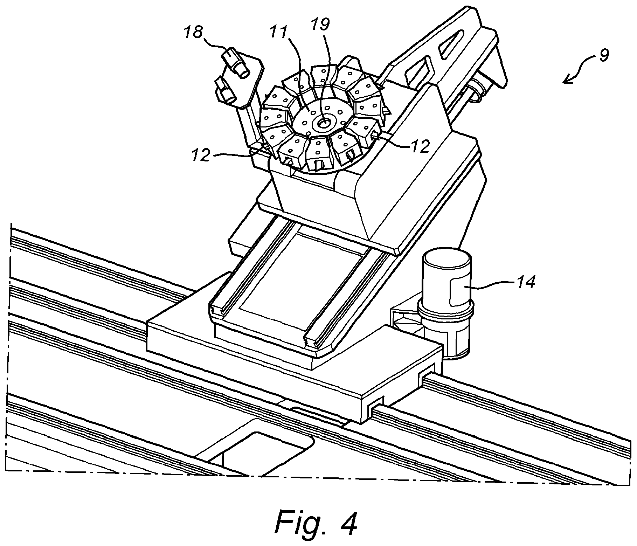

Figure 4 shows schematically the metal-cutting tool (9) according to the present invention. For the metal-cutting of a metal cylinder (3), the metal-cutting tool (9) comprises a tooling holder (11), for holding at least one chisel (12). The tooling holder (11) is constructed as a rotary tooling holder (11), which is rotatable about a rotation axis (19). The tooling holder (11) is arranged to rotate when the metal-cutting tool (9) has executed a predefined number of movements relative to the frame, after which the chisel (12) in the tooling holder (11) has become blunt.

Following rotation, a ground chisel (12) takes the place of the blunt chisel (12) and the machining of the cylinder can proceed.

The tooling holder (11) is displaceable. To this end, the tooling holder (11) is provided with a drive mechanism (14), which is arranged to move the tooling holder (11) over a track (17).

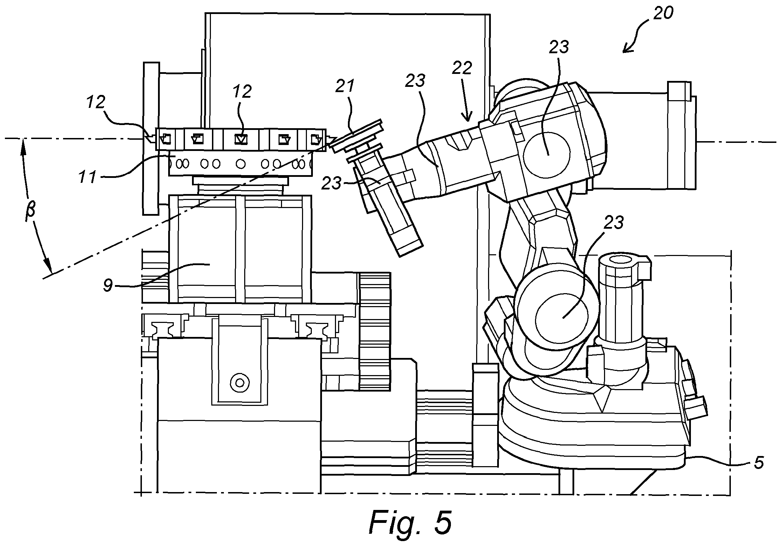

Figure 5 shows schematically a grinding device (20) for grinding a metal-cutting element (12) in the tooling holder (11) of the metal-cutting tool (9). The grinding device (20) is fastened on the frame (5) and is provided with a grinding wheel (21). In order to grind the metal-cutting elements (12) in the tooling holder (11), the metal-cutting tool (9) is movable in the direction of the grinding device (20) in order to change the distance between a metal-cutting element (12) in the metal-cutting tool (9) and the grinding device (20). When the metal-cutting element (12) which must be ground is moved against the rotating grinding wheel (21), the element (12) will be ground. To this end, the grinding device (20) is situated in line with the metal-cutting tool (9).

The grinding device (20) is provided with a robot arm (22), provided with joints (23). The robot arm (22) is rotatable about these joints, so that the angle of the grinding wheel (21) relative to the metal-cutting elements (12) to be ground is adjustable. The angle (β) between the element (12) to be ground and the grinding wheel (21) in Figure 5 is approximately 25 degrees.

## Claims

1. Method for making shaped cutouts (4) in the casing (2) of a metal cylinder (3), such as a roll, using a fluting machine (1), wherein said fluting machine (1) comprises:
• a frame (5), provided with:
∘ a cylinder holder (6), for the rotatable positioning of the metal cylinder (3);
∘ rotation means (7), for rotating the cylinder holder (6) about a rotation axis (R); and
∘ a guide (8) extending parallel to the rotation axis (R);
• a metal-cutting tool (9), movable over the guide (8), for making shaped cutouts (4) in the metal cylinder (3); and provided with a drive mechanism (10), for moving the metal-cutting tool (9) over the guide (8);
• wherein the metal-cutting tool (9) is arranged to remove a portion of the metal cylinder (3) while moving over the guide (8);
• wherein the metal-cutting tool (9) is provided with a tooling holder (11) for a metal-cutting element (12), such as a chisel or a milling cutter;
• wherein the tooling holder (11) is arranged to hold at least two metal-cutting elements (12), wherein the tooling holder (11) is rotatable, the method is **characterised in that**:
the metal tooling cutting tool is further provided with a detection device, for detecting the state of the metal-cutting elements (12) in the tooling holder (11), the method is further **characterised by**:
comprising a step of rotating the tooling holder (11) when the metal-cutting tool (9) has executed a predefined number of movements relative to the frame (5), or by comprising a step of rotating the tooling holder (11) when the state of at least one of the metal-cutting elements (12) reaches a predefined state.

2. Method according to one of the preceding claims, wherein the tooling holder (11) is displaceable perpendicular to the longitudinal direction, such that the distance between the tooling holder (11) and a cylinder (3) placed in the cylinder holder (6) is adjustable.

3. Method according to one of the preceding claims, wherein the tooling holder (11) stands at an angle relative to the frame (5), preferably at an angle between 10 and 45 degrees, preferably between 15 and 35 degrees.

4. Method according to one of the preceding claims, wherein the cylinder holder (6) rotates the cylinder (3) during the movement of the metal-cutting tool (9), wherein, preferably the cylinder holder (6) makes curved cutouts (4) in the cylinder (3).

5. Method according to one of the preceding claims, wherein the guide (8) of the frame (5) comprises at least one track (17), for guiding the metal-cutting tool (9).

6. Method according to one of the preceding claims, wherein the frame (5) is provided with a toothed rack extending in the longitudinal direction, and wherein the metal-cutting tool (9) is provided with a gearwheel driven by the drive mechanism (10), for moving the metal-cutting tool (9) along the toothed rack.

7. Method according to one of the preceding claims, wherein the frame (5) is provided with a support (13), for supporting a cylinder (3) placed in the cylinder holder (6), wherein, preferably, the support (13) comprises at least two, and preferably at least three stays (15), for supporting a cylinder (4)in the support (13), wherein, in particular, the stays (15) stand at an angle relative to one another and wherein the stays (15) are each movable in the direction of a centre axis (16) of a cylinder (3) to be placed in the cylinder holder (6).

8. Method according to one of the preceding claims, wherein the machine (1) also comprising a control unit, for controlling the movement of the metal-cutting tool (9) and/or the driving of the cylinder holder (6).

9. Method according to one of the preceding claims, wherein the metal-cutting tool (9) is provided with at least one camera (18), for recording the fluting of a cylinder (3) in the fluting machine (1).

10. Method according to one of the preceding claims, wherein the detection device comprises a pressure sensor.

11. Method according to one of the preceding claims, wherein the frame (5) is provided with a grinding device (20), for grinding a metal-cutting element (12), wherein the grinding device (20) comprises a grinding element (21), such as a grinding wheel (21), wherein, preferably, the metal-cutting tool (9) is movable in the direction of the grinding device (20) in order to change the distance between a metal-cutting element (12) in the metal-cutting tool (9) and the grinding device (20).

12. Method according to Claim 11, wherein the fluting machine (1) grinds the metal-cutting elements (12) once the metal-cutting elements (12) have reached a predefined state, wherein, preferably, the grinding device (20) comprises a robot arm (22), provided with at least two joints (23), wherein the robot arm (22) preferably adjusts the angle of the grinding device (20) relative to the metal-cutting element (12) by rotation of the robot arm (22) about at least one of the joints (23).

## Patentansprüche

1. Verfahren zum Herstellen geformter Ausschnitte (4) in dem Mantel (2) eines Metallzylinders (3), wie einer Rolle, unter Verwendung einer Riffelungsmaschine (1), wobei die Riffelungsmaschine (1) umfasst:
• einen Rahmen (5), bereitgestellt mit:
∘ einem Zylinderhalter (6) zum drehbaren Positionieren des Metallzylinders (3);
∘ Drehmitteln (7) zum Drehen des Zylinderhalters (6) um eine Drehachse (R); und
∘ einer Führung (8), welche sich parallel zu der Drehachse (R) erstreckt;
• ein Metallschneidwerkzeug (9), welches über die Führung (8) beweglich ist, um geformte Ausschnitte (4) in dem Metallzylinder (3) herzustellen; und welches mit einem Antriebsmechanismus (10) zum Bewegen des Metallschneidwerkzeugs (9) über die Führung (8) bereitgestellt ist;
• wobei das Metallschneidwerkzeug (9) angeordnet ist, um einen Abschnitt des Metallzylinders (3) während der Bewegung über die Führung (8) zu entfernen;
• wobei das Metallschneidwerkzeug (9) mit einem Werkzeughalter (11) für ein Metallschneidelement (12), wie einem Meißel oder einem Fräser, bereitgestellt ist;
• wobei der Werkzeughalter (11) angeordnet ist, um zumindest zwei Metallschneidelemente (12) zu halten, wobei der Werkzeughalter (11) drehbar ist, wobei das Verfahren **dadurch gekennzeichnet ist, dass**:
das Metallwerkzeugschneidwerkzeug weiter mit einer Erfassungsvorrichtung zum Erfassen des Zustands der Metallschneidelemente (12) in dem Werkzeughalter (11) bereitgestellt ist, wobei das Verfahren weiter **gekennzeichnet ist durch**:
Umfassen eines Schritts des Drehens des Werkzeughalters (11), wenn das Metallschneidwerkzeug (9) eine vordefinierte Anzahl von Bewegungen in Bezug zu dem Rahmen (5) ausgeführt hat, oder **durch** Umfassen eines Schritts des Drehens des Werkzeughalters (11), wenn der Zustand von zumindest einem der Metallschneidelemente (12) einen vordefinierten Zustand erreicht.

2. Verfahren nach einem der vorstehenden Ansprüche, wobei der Werkzeughalter (11) senkrecht zur Längsrichtung verschiebbar ist, sodass der Abstand zwischen dem Werkzeughalter (11) und einem in dem Zylinderhalter (6) platzierten Zylinder (3) anpassbar ist.

3. Verfahren nach einem der vorstehenden Ansprüche, wobei der Werkzeughalter (11) in einem Winkel, vorzugsweise in einem Winkel zwischen 10 und 45 Grad, vorzugsweise zwischen 15 und 35 Grad, in Bezug zu dem Rahmen (5) steht.

4. Verfahren nach einem der vorstehenden Ansprüche, wobei der Zylinderhalter (6) den Zylinder (3) während der Bewegung des Metallschneidwerkzeugs (9) dreht, wobei der Zylinderhalter (6) vorzugsweise gekrümmte Ausschnitte (4) in dem Zylinder (3) herstellt.

5. Verfahren nach einem der vorstehenden Ansprüche, wobei die Führung (8) des Rahmens (5) zumindest eine Spur (17) zum Führen des Metallschneidwerkzeugs (9) umfasst.

6. Verfahren nach einem der vorstehenden Ansprüche, wobei der Rahmen (5) mit einer sich in Längsrichtung erstreckenden Zahnstange bereitgestellt ist, und wobei das Metallschneidwerkzeug (9) mit einem von dem Antriebsmechanismus (10) angetriebenen Zahnrad zum Bewegen des Metallschneidwerkzeugs (9) entlang der Zahnstange bereitgestellt ist.

7. Verfahren nach einem der vorstehenden Ansprüche, wobei der Rahmen (5) mit einer Stütze (13) zum Stützen eines in der Zylinderhalterung (6) platzierten Zylinders (3) bereitgestellt ist, wobei die Stütze (13) vorzugsweise zumindest zwei und vorzugsweise zumindest drei Streben (15) zum Stützen eines Zylinders (4) in der Stütze (13) umfasst, wobei insbesondere die Streben (15) in einem Winkel in Bezug zueinander stehen, und wobei die Streben (15) jeweils in Richtung einer Mittelachse (16) eines in der Zylinderhalterung (6) zu platzierenden Zylinders (3) beweglich sind.

8. Verfahren nach einem der vorstehenden Ansprüche, wobei die Maschine (1) auch eine Steuereinheit zum Steuern der Bewegung des Metallschneidwerkzeugs (9) und/oder des Antriebs des Zylinderhalters (6) umfasst.

9. Verfahren nach einem der vorstehenden Ansprüche, wobei das Metallschneidwerkzeug (9) mit zumindest einer Kamera (18) zur Aufzeichnung der Riffelung eines Zylinders (3) in der Riffelungsmaschine (1) bereitgestellt ist.

10. Verfahren nach einem der vorstehenden Ansprüche, wobei die Erfassungsvorrichtung einen Drucksensor umfasst.

11. Verfahren nach einem der vorstehenden Ansprüche, wobei der Rahmen (5) mit einer Schleifvorrichtung (20) zum Schleifen eines Metallschneidelements (12) bereitgestellt ist, wobei die Schleifvorrichtung (20) ein Schleifelement (21), wie eine Schleifscheibe (21), umfasst, wobei das Metallschneidwerkzeug (9) vorzugsweise in Richtung der Schleifvorrichtung (20) beweglich ist, um den Abstand zwischen einem Metallschneidelement (12) in dem Metallschneidwerkzeug (9) und der Schleifvorrichtung (20) zu ändern.

12. Verfahren nach Anspruch 11, wobei die Riffelungsmaschine (1) die Metallschneidelemente (12) schleift, sobald die Metallschneidelemente (12) einen vordefinierten Zustand erreicht haben, wobei die Schleifvorrichtung (20) vorzugsweise einen Roboterarm (22) umfasst, welcher mit zumindest zwei Gelenken (23) bereitgestellt ist, wobei der Roboterarm (22) vorzugsweise den Winkel der Schleifvorrichtung (20) in Bezug zum Metallschneidelement (12) durch Drehung des Roboterarms (22) um zumindest eines der Gelenke (23) anpasst.

## Revendications

1. Procédé de réalisation de découpes mises en forme (4) dans l'enveloppe (2) d'un cylindre métallique (3), tel qu'un rouleau, en utilisant une canneleuse (1), dans lequel ladite canneleuse (1) comprend :
• un châssis (5), muni de :
∘ un porte-cylindre (6), pour le positionnement rotatif du cylindre métallique (3) ;
∘ des moyens de rotation (7), pour faire tourner le porte-cylindre (6) autour d'un axe de rotation (R) ; et
∘ un guide (8) s'étendant parallèlement à l'axe de rotation (R) ;
• un outil de découpe de métal (9), mobile sur le guide (8), pour fabriquer des découpes mises en forme (4) dans le cylindre métallique (3) ; et muni d'un mécanisme d'entraînement (10) pour déplacer l'outil de découpe de métal (9) sur le guide (8) ;
• dans lequel l'outil de découpe de métal (9) est agencé pour enlever une partie du cylindre métallique (3) tout en se déplaçant sur le guide (8) ;
• dans lequel l'outil de découpe de métal (9) est muni d'un porte-outillage (11) pour un élément de découpe de métal (12), tel qu'un ciseau ou une fraise ;
• dans lequel le porte-outillage (11) est agencé pour maintenir au moins deux éléments de découpe de métal (12), dans lequel le porte-outillage (11) est rotatif, le procédé est **caractérisé en ce que** :
l'outil de découpe à outillage métallique est en outre muni d'un dispositif de détection, pour détecter l'état des éléments de découpe de métal (12) dans le porte-outillage (11), le procédé est en outre caractérisé en ce quel :
il comprend une étape de rotation du porte-outillage (11) lorsque l'outil de découpe de métal (9) a exécuté un nombre prédéfini de mouvements par rapport au châssis (5), ou **en ce qu'**il comprend une étape de rotation du porte-outillage (11) lorsque l'état d'au moins l'un des éléments de découpe de métal (12) atteint un état prédéfini.

2. Procédé selon l'une des revendications précédentes, dans lequel le porte-outillage (11) est déplaçable perpendiculairement à la direction longitudinale, de telle sorte que la distance entre le porte-outillage (11) et un cylindre (3) placé dans le porte-cylindre (6) soit ajustable.

3. Procédé selon l'une des revendications précédentes, dans lequel le porte-outillage (11) se situe à un certain angle par rapport au châssis (5), de préférence à un angle compris entre 10 et 45 degrés, de préférence entre 15 et 35 degrés.

4. Procédé selon l'une des revendications précédentes, dans lequel le porte-cylindre (6) fait tourner le cylindre (3) pendant le mouvement de l'outil de découpe de métal (9), dans lequel le porte-cylindre (6) réalise de préférence des découpes courbes (4) dans le cylindre (3).

5. Procédé selon l'une des revendications précédentes, dans lequel le guide (8) du châssis (5) comprend au moins un rail (17), pour guider l'outil de découpe de métal (9).

6. Procédé selon l'une des revendications précédentes, dans lequel le châssis (5) est muni d'une crémaillère s'étendant en direction longitudinale, et dans lequel l'outil de découpe de métal (9) est muni d'une roue dentée entraînée par le mécanisme d'entraînement (10), pour déplacer l'outil de découpe de métal (9) le long de la crémaillère.

7. Procédé selon l'une des revendications précédentes, dans lequel le châssis (5) est muni d'un support (13), pour supporter un cylindre (3) placé dans le porte-cylindre (6), dans lequel, de préférence, le support (13) comprend au moins deux, et de préférence au moins trois éléments de maintien (15), pour supporter un cylindre (4) dans le support (13), dans lequel, en particulier, les éléments de maintien (15) se situent à un certain angle les uns par rapport aux autres et dans lequel les éléments de maintien (15) sont chacun mobiles en direction d'un axe central (16) d'un cylindre (3) à placer dans le porte-cylindre (6).

8. Procédé selon l'une des revendications précédentes, dans lequel la machine (1) comprend également une unité de commande, pour commander le mouvement de l'outil de découpe de métal (9) et/ou l'entraînement du porte-cylindre (6).

9. Procédé selon l'une des revendications précédentes, dans lequel l'outil de découpe de métal (9) est muni d'au moins une caméra (18) pour enregistrer les cannelures d'un cylindre (3) dans la canneleuse (1).

10. Procédé selon l'une des revendications précédentes, dans lequel le dispositif de détection comprend un capteur de pression.

11. Procédé selon l'une des revendications précédentes, dans lequel le châssis (5) est muni d'un dispositif de meulage (20) pour meuler un élément de découpe de métal (12), dans lequel le dispositif de meulage (20) comprend un élément de meulage (21), tel qu'une meule (21), dans lequel, de préférence, l'outil de découpe de métal (9) est mobile en direction du dispositif de meulage (20) afin de modifier la distance entre un élément de découpe de métal (12) dans l'outil de découpe de métal (9) et le dispositif de meulage (20).

12. Procédé selon la revendication 11, dans lequel la canneleuse (1) meule les éléments de découpe de métal (12) une fois que les éléments de découpe de métal (12) ont atteint un état prédéfini, dans lequel, de préférence, le dispositif de meulage (20) comprend un bras de robot (22), muni d'au moins deux articulations (23), dans lequel le bras de robot (22) ajuste de préférence l'angle du dispositif de meulage (20) par rapport à l'élément de découpe de métal (12) par rotation du bras de robot (22) autour d'au moins une des articulations (23).
